# FASCICULE DE BREVET EUROPEEN

(11) **EP 3 432 086 B1**
(45) Date de publication et mention de la délivrance du brevet: **15.04.2020**
(21) Numéro de dépôt: 17182439.4
(22) Date de dépôt: 20.07.2017
(51) Int. Cl.: G04B 37/10

(54) **SOUPAPE DE SÉCURITÉ POUR PIÈCE D'HORLOGERIE**
SICHERHEITSVENTIL FÜR UHR
SAFETY VALVE FOR A TIMEPIECE

(43) Date de publication de la demande: 23.01.2019
(73) Titulaire: Meco S.A., 2540 Grenchen (CH)
(72) Inventeur: BAEBLER, Jean, 3073 Gümligen (CH); OLVASZTO, Christian, 2540 Grenchen (CH); PODVIN, Pierre, 1110 Morges (CH)
(74) Mandataire: ICB SA

(56) Documents cités:
- EP-A1- 0 556 155
- CH-A1- 703 455
- JP-U- S5 491 150

## Description

### Domaine de l'invention

La présente invention concerne une soupape de sécurité configurée pour être intégrée dans une tête couronne d'une pièce d'horlogerie. Ce type de soupape est particulièrement bien adapté pour des montres de plongée.

### Arrière-plan de l'invention

Il est connu de munir une boîte de montre d'une tête couronne comprenant une soupape afin de permettre soit d'insuffler un gaz dans la boite, afin de faire régner à l'intérieur de celle-ci une pression supérieure à la pression ambiante, empêchant la pénétration d'eau, de vapeur ou de poussière à l'intérieur de la boîte, soit au contraire de faire le vide à l'intérieur de celle-ci en vue de soustraire le mouvement aux effets de l'air contenu dans la boîte lors de sa fermeture. Une telle tête couronne, en position vissée, assure une étanchéité renforcée de la pièce d'horlogerie. En position dévissée, la tête couronne est dans une configuration ouverte et permet d'évacuer un excès de fluide. Une fois dévissée, la tête couronne peut également prendre différentes positions axiales, chaque position axiale permettant de réaliser un mode de réglage.

Toutefois, lorsqu'un utilisateur dévisse la tête couronne en dévissant son capot, il risque de dévisser complètement le capot entrainant une désolidarisation entre ce dernier et le reste de la tête couronne. L'utilisateur risque alors de perdre le capot ou à tout le moins d'avoir des difficultés à le remonter correctement, en respectant également la remise en place du joint d'étanchéité.

On connaît les documents EP 0 556 155 et CH703455 divulguant une tête couronne selon le préambule de la revendication 1.

### Résumé de l'invention

Un but de la présente invention est par conséquent de proposer une tête couronne empêchant le dévissage complet de son capot.

A cet effet, il est proposé une tête couronne pour pièce d'horlogerie, notamment pour montre de plongée, comportant un capot comprenant un couvercle et une jupe axiale, un tube destiné à être fixé dans un boitier de la pièce d'horlogerie, un joint d'étanchéité disposé entre le tube et la jupe axiale, et un canon central agencé pour être en prise avec le tube. Le canon central et le capot forment un ensemble apte à être placé dans différentes positions axiales par rapport au tube. La tête couronne comprend en outre une soupape de sécurité comportant un canal d'évacuation agencé pour pouvoir être en communication fluidique avec l'intérieur du boitier lorsque la soupape est dans une configuration ouverte afin d'évacuer un excès de fluide, ladite soupape de sécurité comportant en outre un piston monté à l'intérieur du canon central et un organe élastique agencé pour coopérer avec le piston, lequel est configuré pour se déplacer axialement au gré des variations de pression à l'intérieur du boîtier. La tête couronne comporte en outre des moyens de blocage empêchant la désolidarisation entre le capot et le tube.

Selon l'invention, les moyens de blocage comprennent un épaulement agencé sur la paroi interne du tube et comportant une surface d'appui contre laquelle une tête d'une vis de guidage solidaire du piston peut venir en butée et un rebord prévu à la base du canon central et agencé pour venir en butée contre un épaulement prévu sur le piston.

Selon une première variante de réalisation, la soupape de sécurité peut comporter par ailleurs un régulateur de pression agencé à l'intérieur du canal d'évacuation pour maitriser la vitesse de sortie du fluide.

Selon une forme de réalisation avantageuse, le régulateur de pression comporte une bille agencée pour coopérer avec un siège de bille. Cette bille est agencée sur le siège de bille de manière à obstruer le passage d'un fluide dans le canal d'évacuation lorsque la pression interne en amont de la bille est inférieure à une valeur prédéterminée. La bille est délogée de son siège lorsque ladite pression interne excède la valeur prédéterminée afin d'établir ladite communication fluidique.

Selon une forme de réalisation avantageuse, le siège de bille, le tube et la jupe axiale présentent une symétrie de révolution par rapport à l'axe de rotation (A) du capot. Le siège comporte une ouverture centrale correspondant à l'entrée du canal d'évacuation ainsi qu'une surface d'appui destinée à être en contact avec la bille.

Selon une seconde variante de réalisation, la soupape de sécurité peut comporter par ailleurs une membrane agencée pour être perméable aux gaz et établir une communication fluidique depuis l'intérieur du boitier vers l'extérieur lorsque ladite pression interne excède une valeur prédéterminée et imperméable aux liquides circulant depuis l'extérieur du boitier vers l'intérieur du boitier.

Selon une forme de réalisation avantageuse, le piston et l'organe élastique forment un ensemble agencé d'une part pour pouvoir actionner le déplacement d'une tige de commande, et d'autre part, pour la régulation de la pression à l'intérieur du boitier.

La présente invention concerne également une pièce d'horlogerie, notamment une montre de plongée, comportant au moins la tête couronne de réglage telle que définie ci-dessus.

### Description sommaire des dessins

D'autres caractéristiques et avantage de la présente invention apparaîtrons à la lecture de plusieurs formes de réalisation données uniquement à titre d'exemples non limitatifs et faites en référence aux dessins annexés dans lesquels :
- la figure 1 représente une vue en demi-coupe d'une tête couronne de réglage dans une position vissée avec soupape de sécurité dans une configuration fermée selon une première forme de réalisation ;
- la figure 2 représente une vue similaire à la figure 1 avec la tête couronne de réglage dans une position dévissée et la soupape de sécurité dans une configuration ouverte ;
- les figures 3a, 3b et 3c sont chacune identique à la figure 2, et dans lesquelles est représenté schématiquement la progression d'un fluide, par exemple de l'hélium, dans le canal d'évacuation ;
- la figure 4 représente une vue en demi-coupe d'une tête couronne de réglage dans une position vissée selon une autre forme de réalisation avec soupape de sécurité dans une configuration fermée ; et
- la figure 5 représente une vue similaire à la figure 4 avec la tête couronne de réglage dans une position dévissée et la soupape de sécurité dans une configuration ouverte.

### Description détaillée de modes de réalisation préférés

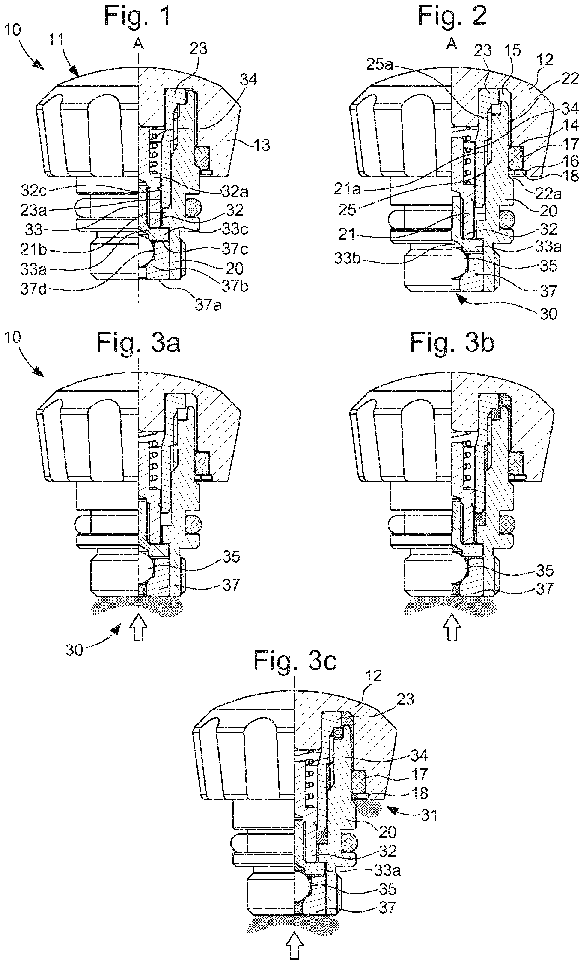

Une tête couronne de réglage 10 notamment pour montre de plongée selon une première forme de réalisation de l'invention va maintenant être décrite en référence aux figures 1 à 3c.

La tête couronne 10 comporte un tube 20 destiné à être fixé sur un boitier de montre (non représentée) par vissage ou chassage dans la carrure du boitier. Le tube 20 comporte une partie taraudée 21a disposée sur sa paroi interne 21 ainsi qu'un renflement 22a disposé le long de la circonférence de sa paroi externe 22. La tête couronne 10 comporte également un capot 11, lequel comprend un couvercle 12 et une jupe axiale 13 présentant une symétrie de révolution autour de l'axe de rotation A du capot 11. Le couvercle 12 et la jupe axiale 13 du capot 11 définissent une cavité 15 dans le capot 11. La tête couronne 10 comporte en outre un canon central 23 agencé dans la cavité 15 du capot 11 et solidaire à celui-ci. Le canon central 23 comporte sur sa paroi externe 25 une partie filetée 25a vissée dans la partie taraudée 21a du tube 20.

La tête couronne de réglage 10 comporte par ailleurs un joint d'étanchéité 17 interposé entre la jupe axiale 13 du capot 11 et le tube 20 de manière à garantir l'étanchéité de la tête couronne indépendamment du fait que le capot 11 se trouve dans une première position axiale dans laquelle la tête couronne est vissée ou dans une seconde position axiale dans laquelle la tête couronne est dévissée. Dans cette forme de réalisation, ce joint d'étanchéité 17 est un joint torique. Ce joint 17 est agencé entre en épaulement circulaire 14 réalisé dans la jupe axiale 13 et une bague de maintien 18 de forme annulaire. Cette bague 18 est fixée, par exemple par chassage, dans une rainure 16 de forme correspondante se trouvant vers la base de la jupe axiale 13 en regard du tube 20.

En référence à la figure 1, le joint d'étanchéité 17 est surcompressé par le renflement 22a du tube 20 de telle sorte que les propriétés d'étanchéité soient les meilleures possibles lorsque le capot 11 se trouve dans la première position axiale dans laquelle la tête couronne 10 est dans une configuration dite vissée.

La tête couronne de réglage 10 comporte également un piston 32 logé dans une ouverture centrale du canon central 23 ainsi qu'un organe élastique, par exemple un ressort de compression 34 du type hélicoïdal, dans une cavité définie par l'ensemble capot-canon d'une part et par le piston 32 d'autre part. Le ressort 34 est compressé axialement entre le couvercle 12 du capot 11 et un épaulement 32a du piston 32 et il permet notamment d'éloigner le capot 11 de l'épaulement du piston 32. Le piston 32 relie cinématiquement le capot 11 à une tige de commande (non représentée) du mouvement horloger logé dans la boite de montre. Cette tige de commande permet au porteur d'effectuer différentes commandes en fonction de la position axiale du capot 11 par rapport au tube 20, par exemple le remontage de la montre lorsque le capot 11 se trouve dans une première position axiale tel qu'illustré par la figure 1, ou certaines corrections, comme celle de l'heure, lorsque le capot 11 se trouve dans une seconde position axiale tel qu'illustré par la figure 2.

Le piston 32 et le ressort 34 sont également impliqués dans la régulation de la pression à l'intérieur du boitier de montre grâce à une soupape de sécurité dont une description détaillée est donnée ci-dessous.

Le piston et le ressort forment donc un ensemble qui a l'avantage d'être impliqué dans la réalisation de deux fonctions principales qui sont indépendantes l'une de l'autre, à savoir : l'activation de la tige de commande pour effectuer différents réglages d'une part, et la régulation de la pression à l'intérieur du boitier de montre d'autre part.

En outre, la tête couronne 10 comporte des moyens de blocage empêchant la désolidarisation entre le capot 11 et le tube 20.

Conformément à l'invention, les moyens de blocage comprennent un épaulement 21b agencé sur la paroi interne 21 du tube 20 et comportant une surface d'appui contre laquelle une partie du piston 32 peut venir en butée. Les moyens de blocage comprennent également un rebord 23a prévu à la base du canon central 23 et agencé pour venir en butée contre l'épaulement 32a prévu sur le piston 32.

La partie du piston 32 pouvant venir en butée contre l'épaulement 21b du tube 20 est formée par la tête 33a d'une vis de guidage 33 solidaire du piston 32. Plus particulièrement, le piston 32 comprend un taraudage dans lequel la vis de guidage 33 est vissée. La vis de guidage 33 comporte également une partie centrale évidée 33b en forme de cône ainsi qu'une partie annulaire périphérique 33c qui s'étend jusqu'à la paroi interne 21 du tube 20. La partie annulaire périphérique 33c de la tête 33a de la vis de guidage 33 est agencée pour venir en butée contre cet épaulement 21b du tube 20 lorsque le capot 11 est amené dans sa seconde position axiale. En outre, le rebord 23a à la base du canon central 23 est agencé pour s'engager dans une encoche 32c prévue à cet effet sous la face inférieure de l'épaulement 32a du piston 32 lorsque ledit rebord 23a vient en butée contre la face inférieure de l'épaulement 32a du piston 32. Ainsi, lorsque la tête couronne 10 est dévissée, le canon central 23 sera bloqué par l'épaulement 32a du piston 32, qui lui-même sera bloqué, étant solidaire de la vis de guidage 33 elle-même bloquée par l'épaulement 21b du tube 20. Ceci permet d'éviter un dévissement excessif de la tête couronne 10 de façon à empêcher que le capot 11 se désolidarise du tube 20.

Afin de moins solliciter les joints d'étanchéité de la tête couronne, et de mieux réguler les variations de pression à l'intérieur du boitier de montre occasionnées par exemple par la remontée du plongeur à la surface, une soupape de sécurité est intégrée à la tête couronne.

La soupape de sécurité comporte un canal d'évacuation agencé pour pouvoir être en communication fluidique avec l'intérieur du boitier de montre lorsque la soupape est dans une configuration ouverte afin d'évacuer un excès de pression dans le boitier.

Selon une variante, la soupape comporte un régulateur de pression agencé à l'intérieur du canal d'évacuation pour maitriser la vitesse de sortie d'un fluide qui se présente sous la forme d'un gaz, de préférence de l'hélium. Le régulateur de pression comporte à cet effet une bille 35 coopérant avec un siège de bille 37 monté à l'entrée 30 du canal d'évacuation.

Le siège de bille 37, le tube 20 et la jupe axiale 13 présentent une symétrie de révolution par rapport à l'axe de rotation A du capot 11. La bille et son siège peuvent par exemple être à base de métal, de céramique ou de matériaux thermoplastiques entre autre.

Le siège 37 comporte une base annulaire 37a comportant une ouverture dont l'axe de révolution coïncide avec l'axe de rotation A du capot 11. Le diamètre de cette ouverture est inférieur au diamètre de la bille 35. Cette ouverture correspond à l'entrée 30 du canal d'évacuation de la soupape. Le siège 37 comporte également une surface d'appui 37b inclinée et circulaire destinée à être en contact avec la bille 35, une paroi cylindrique 37d afin d'assurer le centrage de la bille 35 par rapport à l'axe de rotation A du capot 11 et une surface d'appui périphérique 37c disposée en regard de la partie annulaire périphérique 33c de la tête 33a de la vis de guidage 33.

La tête 33a de la vis de guidage 33 est disposée en regard de la bille 35. La configuration et le positionnement de la vis de guidage 33 et du siège 37 permettent de former une cage délimitant un espace dans lequel la bille 35 peut se déplacer sous l'effet de la pression.

La bille 35 est agencée sur son siège 37 de manière à obstruer le passage du gaz dans le canal d'évacuation lorsque la pression dans le boitier de montre, en amont de la bille, est inférieure une valeur prédéterminée. Cette valeur peut être adaptée aux circonstances, cette adaptation étant réalisée par le choix du ressort de compression 34 qui maintient une extrémité du piston 32 en appui contre la bille 35. Les propriétés du ressort 34 sont donc choisies pour gérer la contrainte qu'exerce le piston 32 sur la bille 35 afin de contrôler la pression d'ouverture de la soupape. On notera que la bille est toujours sous la contrainte du ressort 34 lorsque la tête couronne 10 est dans une configuration vissée (figure 1) alors que le ressort 34 est ajusté pour que la bille 35 soit libre ou légèrement sous contrainte lorsque la tête couronne 10 est dans une configuration dévissée (figure 2).

En référence aux figures 3a, 3b, et 3c, la tête couronne 10 est dans une configuration dévissée alors que la pression à l'intérieur du boitier de montre excède un seuil critique. Sous l'effet de cette pression excessive, la bille 35 est délogée de son siège 37 ce qui permet au gaz d'accéder à l'entrée 30 du canal d'évacuation (figure 3a), puis de se déplacer le long de ce canal (figure 3b) jusqu'à la sortie 31 du canal (figure 3c) afin de permettre l'évacuation du gaz hors de la soupape.

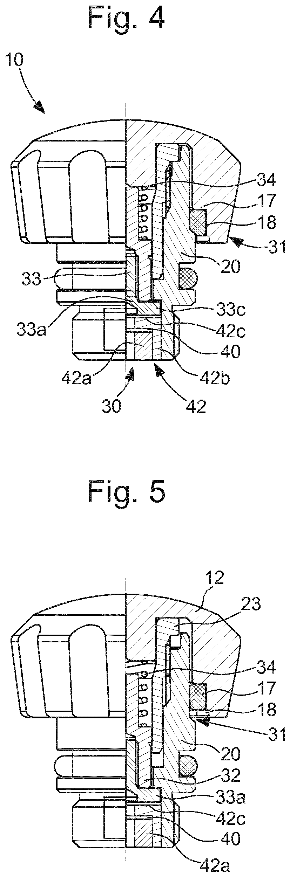

Une tête couronne de réglage 10 pour montre de plongée selon une deuxième forme de réalisation va maintenant être décrite en référence aux figures 4 et 5. Le principe de fonctionnement des moyens de blocage de la tête couronne selon cette forme de réalisation est identique à celle qui vient d'être décrite. Aussi, pour des raisons essentiellement de concision et de clarté, seules les différences structurelles vont être décrites ci-après.

Selon les figures 4 et 5, qui illustrent la tête couronne de réglage dans une configuration vissée, respectivement dévissée, la soupape de sécurité comporte une membrane 40 agencée pour être perméable aux gaz et établir une communication fluidique depuis l'intérieur du boitier vers l'extérieur lorsque ladite pression interne excède une valeur prédéterminée et imperméable aux liquides circulant depuis l'extérieur du boitier vers l'intérieur du boitier. A cet effet, un support de membrane 42 est monté à l'entrée 30 du canal d'évacuation, à l'intérieur de la base du tube 20. Le support de membrane 42 comprend une base annulaire 42a sur laquelle repose le bord de la membrane 40 et comportant une ouverture dont l'axe de révolution coïncide avec l'axe de rotation A du capot 11. Cette ouverture correspond à l'entrée 30 du canal d'évacuation de la soupape. Le support de membrane 42 comprend également une bague épaulée 42b agencée pour pincer la membrane 40 contre la base 42a et dont l'épaulement 42c est disposé en regard de la partie annulaire périphérique 33c de la tête 33a de la vis de guidage 33. Un jeu est prévu entre l'épaulement 42c et la partie annulaire périphérique 33a pour former une partie du canal d'évacuation. La membrane est par exemple composée d'un film en polymère imperméable à l'eau et perméable aux gaz. Typiquement le film polymère est porté par un substrat poreux aux gaz. Avantageusement cette membrane peut être une membrane vendue par la société Gore sous la référence « Acoustic vent GAW331 ».

Lorsque la tête couronne 10 est dans une configuration dévissée alors que la pression à l'intérieur du boitier de montre excède un seuil critique, le gaz vient en contact avec la membrane 40 qui est perméable aux gaz ce qui permet au gaz de la traverser, et de se déplacer le long du canal d'évacuation formé par les différents éléments dans la tête couronne jusqu'à la sortie 31 du canal afin de permettre l'évacuation du gaz hors de la soupape.

Un dévissement excessif de la tête couronne 10 de façon à empêcher que le capot 11 se désolidarise du tube 20 est évité grâce aux moyens de blocage similaires à ceux de la première variante.

Naturellement, l'invention n'est pas limitée aux modes de réalisation décrits en référence aux figures et des variantes pourraient être envisagées sans sortir du cadre de l'invention tel que défini par les revendications annexées. Par exemple, le piston peut être d'un seul tenant ou être constitué de plusieurs pièces assemblées.

## Revendications

1. Tête couronne (10) pour pièce d'horlogerie, notamment pour montre de plongée, comportant un capot (11) comprenant un couvercle (12) et une jupe axiale (13), un tube (20) destiné à être fixé dans un boitier de la pièce d'horlogerie, un joint d'étanchéité (17) disposé entre le tube (20) et la jupe axiale (13), et un canon central (23) agencé pour être en prise avec le tube (20), le canon central (23) et le capot (11) formant un ensemble apte à être placé dans différentes positions axiales par rapport au tube (20), la tête couronne (10) comprenant en outre une soupape de sécurité comportant un canal d'évacuation agencé pour pouvoir être en communication fluidique avec l'intérieur du boitier lorsque la soupape est dans une configuration ouverte afin d'évacuer un excès de fluide, ladite soupape de sécurité comportant en outre un piston (32) monté à l'intérieur du canon central (23) et un organe élastique (34) agencé pour coopérer avec le piston (32), lequel est configuré pour se déplacer axialement au gré des variations de pression à l'intérieur du boîtier, la tête couronne (10) comportant en outre des moyens de blocage empêchant la désolidarisation entre le capot (11) et le tube (20), dans laquelle les moyens de blocage sont sous la forme d'un épaulement (21b) agencé sur la paroi interne (21) du tube (20) et comportant une surface d'appui contre laquelle une tête (33a) d'une vis de guidage (33) solidaire du piston (32) peut venir en butée et sous la forme d'un rebord (23a) prévu à la base du canon central (23) et agencé pour venir en butée contre un épaulement (32a) prévu sur le piston (32).

2. Tête couronne selon la revendication précédente, **caractérisée en ce que** la soupape de sécurité comporte par ailleurs un régulateur de pression agencé à l'intérieur du canal d'évacuation pour maitriser la vitesse de sortie du fluide.

3. Tête couronne selon la revendication 2, **caractérisée en ce que** le régulateur de pression comporte une bille (35) agencée pour coopérer avec un siège de bille (37), la bille étant agencée sur le siège de bille de manière à obstruer le passage d'un fluide dans le canal d'évacuation lorsque la pression interne en amont de la bille est inférieure à une valeur prédéterminée, la bille (35) étant délogée du siège (37) lorsque ladite pression interne excède la valeur prédéterminée afin d'établir ladite communication fluidique.

4. Tête couronne selon la revendication 3, **caractérisée en ce que** le siège de bille (35), le tube (20) et la jupe axiale (13) présentent une symétrie de révolution par rapport à l'axe de rotation (A) du capot (11), le siège (35) comportant une ouverture centrale (30) correspondant à l'entrée du canal d'évacuation ainsi qu'une surface d'appui (37b) destinée à être en contact avec la bille (35).

5. Tête couronne selon la revendication 1, **caractérisée en ce que** la soupape de sécurité comporte une membrane (40) agencée pour être perméable aux gaz et établir une communication fluidique depuis l'intérieur du boitier vers l'extérieur lorsque ladite pression interne excède une valeur prédéterminée et imperméable aux liquides circulant depuis l'extérieur du boitier vers l'intérieur du boitier.

6. Tête couronne selon l'une des revendications précédentes, **caractérisée en ce que** le piston (32) et l'organe élastique (34) forment un ensemble agencé d'une part pour pouvoir actionner le déplacement d'une tige de commande, et d'autre part, pour la régulation de la pression à l'intérieur du boitier.

7. Pièce d'horlogerie, notamment montre de plongée, comportant la tête couronne selon l'une quelconque des revendications 1 à 6.

## Patentansprüche

1. Kronenkopf (10) für Uhren, insbesondere für Taucheruhren, umfassend eine Kappe (11) mit einem Abschlussdeckel (12) und einem axialen Rand (13), eine Hülse (20) zur Befestigung in einem Gehäuse der Uhr, eine zwischen der Hülse (20) und dem axialen Rand (13) angeordnete Dichtung (17) und eine zentrale Buchse (23), die für den Eingriff mit der Hülse (20), der zentralen Buchse (23) und der Kappe (11) angeordnet ist, die eine Einheit bilden, die in verschiedenen axialen Positionen in Bezug auf die Hülse (20) positionierbar ist, wobei der Kronenkopf (10) unter anderem ein Sicherheitsventil mit einem Ablasskanal umfasst, der angeordnet ist für eine Fluidverbindung mit dem Inneren des Gehäuses, wenn sich das Ventil in einer offenen Konfiguration befindet, um überschüssige Flüssigkeit abzulassen, wobei das Sicherheitsventil ferner einen im Inneren der zentrale Buchse (23) montierten Kolben (32) und ein elastisches Element (34) umfasst, das so angeordnet ist, dass es mit dem Kolben (32) zusammenwirkt, der so konfiguriert ist, dass er sich in Abhängigkeit von den Druckschwankungen im Inneren des Gehäuses bewegt, wobei der Kronenkopf (10) ferner die Abtrennung der Kappe (11) von der Hülse (20) verhindernde Verriegelungsmittel umfasst,
wozu die Verriegelungsmittel die Form eines auf der Innenwand (21) der Hülse (20) angeordneten Schulterstücks (21b) aufweisen, das eine Stützfläche aufweist, gegen die ein Kopf (33a) einer mit dem Kolben (32) fest verbundenen Führungsschraube (33) in Anschlag gelangen kann, und die Form eines an der Basis der zentralen Buchse (23) vorgesehenen Rands (23a) aufweisen, der so angeordnet ist, dass er gegen ein auf dem Kolben (32) vorgesehenes Schulterstück (32a) in Anschlag gelangt.

2. Kronenkopf nach dem vorstehenden Anspruch, **dadurch gekennzeichnet, dass** das Sicherheitsventil ferner einen Druckregler umfasst, der im Inneren des Ablasskanals angeordnet ist, um die Abflussgeschwindigkeit der Flüssigkeit zu steuern.

3. Kronenkopf nach Anspruch 2, **dadurch gekennzeichnet, dass** der Druckregler eine Kugel (35) umfasst, die so angeordnet ist, dass sie mit einem Kugelsitz (37) zusammenwirkt, wobei die Kugel auf dem Kugelsitz angeordnet ist, um den Durchfluss einer Flüssigkeit im Ablasskanal zu versperren, wenn der Innendruck stromaufwärts der Kugel unter einem vorbestimmten Wert liegt, wobei die Kugel (35) aus dem Sitz (37) entfernt wird, wenn der Innendruck den vorbestimmten Wert überschreitet, um die Fluidverbindung herzustellen.

4. Kronenkopf nach Anspruch 3, **dadurch gekennzeichnet, dass** der Kugelsitz (35), die Hülse (20) und der axiale Rand (13) eine Drehsymmetrie in Bezug auf die Drehachse (A) der Kappe (11) aufweisen, wobei der Sitz (35) eine dem Eingang des Ablasskanals entsprechende zentrale Öffnung (30) sowie eine Stützfläche (37b) für den Kontakt mit der Kugel (35) umfasst.

5. Kronenkopf nach Anspruch 1, **dadurch gekennzeichnet, dass** das Sicherheitsventil eine Membran (40) umfasst, die dazu vorgesehen ist, gasdurchlässig zu sein und eine Fluidverbindung vom Inneren des Gehäuses nach außen herzustellen, wenn der Innendruck einen vorstimmten Wert überschreitet, und für die Flüssigkeiten undurchlässig zu sein, die von außerhalb des Gehäuses in das Innere des Gehäuses fließen.

6. Kronenkopf nach einem der vorstehenden Ansprüche, **dadurch gekennzeichnet, dass** der Kolben (32) und das elastische Element (34) eine Einheit bilden, die dazu vorgesehen ist, einerseits die Bewegung einer Steuerstange zu aktivieren und anderseits den Druck im Inneren des Gehäuses zu regeln.

7. Uhr, insbesondere Taucheruhr, umfassend den Kronenkopf nach einem der Ansprüche 1 bis 6.

## Claims

1. Crown head (10) for a timepiece, in particular for a diving watch, comprising a cap (11) comprising a cover (12) and an axial skirt (13), a tube (20) which is designed to be secured in a case of the timepiece, a sealing gasket (17) disposed between the tube (20) and the axial skirt (13), and a central pipe (23) which is designed to be engaged with the tube (20), the central pipe (23) and the cap (11) forming an assembly which can be placed in different axial positions relative to the tube (20), the crown head (10) also comprising a safety valve comprising a discharge channel which is designed to be able to be in fluid communication with the inside of the case when the valve is in an open configuration, in order to discharge excess fluid, the said safety valve also comprising a piston (32) fitted inside the central pipe (23) and an elastic member (34) designed to cooperate with the piston (32), which is configured to be displaced axially according to the pressure variations inside the case, the crown head (10) also comprising blocking means which prevent separation of the cap (11) and the tube (20), wherein the blocking means are in the form of a shoulder (21b) arranged on the inner wall (21) of the tube (20), and comprising a support surface against which a head (33a) of a guide screw (33) integral with the piston (32) can abut, and in the form of a rim (23a) which is provided at the base of the central pipe (23), and is designed to abut against a shoulder (32a) provided on the piston (32).

2. Crown head according to the preceding claim, **characterised in that** the safety valve also comprises a pressure regulator arranged inside the discharge channel in order to control the output speed of the fluid.

3. Crown head according to claim 2, **characterised in that** the pressure regulator comprises a ball (35) which is designed to cooperate with a ball seat (37), the ball being arranged on the ball seat such as to obstruct the passage of a fluid in the discharge channel when the internal pressure upstream from the ball is lower than a predetermined value, the ball (35) being dislodged from the ball seat (37) when the said internal pressure exceeds the predetermined value, in order to establish the said fluid communication.

4. Crown head according to claim 3, **characterised in that** the ball seat (37), the tube (20) and the axial skirt (13) have symmetry of revolution relative to the axis of rotation (A) of the cap (11), the ball seat (37) comprising a central opening (30) corresponding to the input of the discharge channel, as well as a support surface (37b) which is designed to be in contact with the ball (35).

5. Crown head according to claim 1, **characterised in that** the safety valve also comprises a membrane (40) which is designed to be permeable to gases, and to establish fluid communication from the inside of the case to the outside, when the said internal pressure exceeds a predetermined value, and which membrane is impermeable to liquids which circulate from the outside of the case to the inside of the case.

6. Crown head according to one of the preceding claims, **characterised in that** the piston (32) and the elastic member (34) form an assembly which is designed firstly to be able to activate the displacement of a control rod, and secondly for regulation of the pressure inside the case.

7. Timepiece, in particular a diving watch, comprising the crown head according to any one of claims 1 to 6.
